# FASCICULE DE BREVET EUROPEEN

(11) **EP 0 814 305 B1**
(45) Date de publication et mention de la délivrance du brevet: **28.11.2001**
(21) Numéro de dépôt: 97410060.4
(22) Date de dépôt: 12.06.1997
(51) Int. Cl.: F24D 3/16

(54) **Panneau de climatisation modulaire**
Modulare Klimatisierungsplatte
Modular panel for air conditioning

(30) Priorité: 13.06.1996 FR 9607571
(43) Date de publication de la demande: 29.12.1997
(73) Titulaire: Picchiottino, André Alain, 73100 Aix-les-Bains (FR)
(72) Inventeur: Picchiottino, André Alain, 73100 Aix-les-Bains (FR)
(74) Mandataire: Hecké, Gérard

(56) Documents cités:
- CH-A- 321 024
- DE-U- 9 317 404
- DE-U- 9 320 255
- FR-A- 1 522 767

## Description

L'invention est relative à un panneau de climatisation modulaire destiné à être disposé en sous-face du plafond d'un local à climatiser, et comprenant une plaque de plâtre se trouvant en contact thermique avec des moyens de circulation d'un fluide caloporteur pour provoquer une propagation énergétique par rayonnement et par convection naturelle, susceptible d'émettre du froid ou du chaud en fonction de la température du fluide caloporteur, les moyens de circulation du fluide comportant un tuyau positionné selon une pluralité de méandres dans des rails de maintien, et se trouvant en appui contre la face interne de la plaque agencée selon une cuvette.

Il est bien connu de faire usage de panneaux radiants pour constituer un plafond froid. Les panneaux sont parcourus par de l'eau ayant une température comprise entre 15°C et 18°C, l'ensemble des panneaux étant disposé sur une ossature métallique d'un faux-plafond. La propagation du froid s'effectue par rayonnement à partir du plafond vers le bas du local, sans émission sonore, et sans mouvement artificiel d'air. Les moyens de circulation de l'eau peuvent être formés par des tubes en cuivre ou en acier, sertis sur des ailettes en tôle jouant le rôle de diffuseur. Un tel dispositif est décrit dans le document DE-U-9317404, et présente un poids élevé.

Un autre système de climatisation pour plafond suspendu concerne un module équipé de nattes en tubes capillaires, lesquelles sont soit intégrées dans une plaque de plâtre, soit posées en bon contact thermique sur la face supérieure de la plaque. Le module nécessite une multitude de tubes capillaires devant être reliés individuellement à ceux des modules voisins par des raccords de liaison. La mise en oeuvre d'un tel dispositif de climatisation est compliquée, et son coût d'installation est relativement élevé.

L'objet de l'invention consiste à réaliser un panneau de climatisation modulaire pouvant être installé facilement, et de construction simple et fiable.

Le panneau de climatisation selon l'invention est caractérisé en ce que:
- le tube est réalisé en un matériau synthétique de résistance mécanique élevée, et ayant un coefficient de dilatation thermique compatible avec celui du plâtre de la plaque,
- les méandres du tube sont maintenus en bon contact thermique avec ladite face interne par l'application de moyens de collage à base d'un enduit renfermant un composant de même nature que le plâtre,
- un revêtement d'isolant thermique est appliqué au-dessus du tube en étant fixé sur les bords de la plaque pour constituer un écran thermique empêchant un échange calorifique en direction opposée de ladite plaque.

Deux raccords de jonction sont nécessaires par panneau pour assurer l'interconnexion avec les panneaux adjacents ou des collecteurs. L'interconnexion s'effectue avantageusement au moyen de flexibles accouplés aux raccords par vissage ou encliquetage.

Selon un mode de réalisation préférentiel, l'enrobage du tube par l'enduit forme un cône de réception de la chaleur, le sommet du cône étant situé au-dessus du tube, et à l'opposé de la face interne.

Le revêtement d'isolant thermique est formé par une couche d'isolant minéral, notamment de laine de verre, et d'une feuille superficielle d'aluminium. Tout autre matériau isolant peut bien entendu être utilisé pour constituer le revêtement. La feuille d'aluminium est avantageusement perforée par des trous de respiration pour que la plaque de plâtre puisse jouer son rôle de régulateur hygroscopique.

La structure du panneau selon l'inventaire permet facilement l'adjonction d'une ventilation auxiliaire, ou d'un système d'amenée d'air neuf. La plaque de plâtre comporte à cet effet une première zone statique destinée à la propagation calorifique par rayonnement, et une deuxième zone dynamique réservée pour la mise en place d'un support de réception de moyens de ventilation et/ou d'éclairage.

D'autres avantages et caractéristiques ressortiront plus clairement de la description qui va suivre d'un mode de mise en oeuvre de l'invention donné à titre d'exemple non limitatif, et représenté aux dessins annexés, dans lesquels:
- la figure 1 est une vue en plan du panneau de climatisation selon l'invention, le revêtement isolant supérieur étant enlevé;
- les figures 2 et 3 sont des vues respectives à échelles agrandies selon les lignes 2-2 et 3-3 de la figure 1;
- la figure 4 montre une association de plusieurs panneaux élémentaires, avec leurs différentes jonctions aux collecteurs de distribution du fluide caloporteur;
- la figure 5 est une vue identique de la figure 4 d'une variante d'installation;
- la figure 6 représente l'installation des panneaux sur une ossature d'un faux-plafond;
- les figures 7 et 8 sont des vues identiques de la figure 6 de deux autres variantes de réalisation.

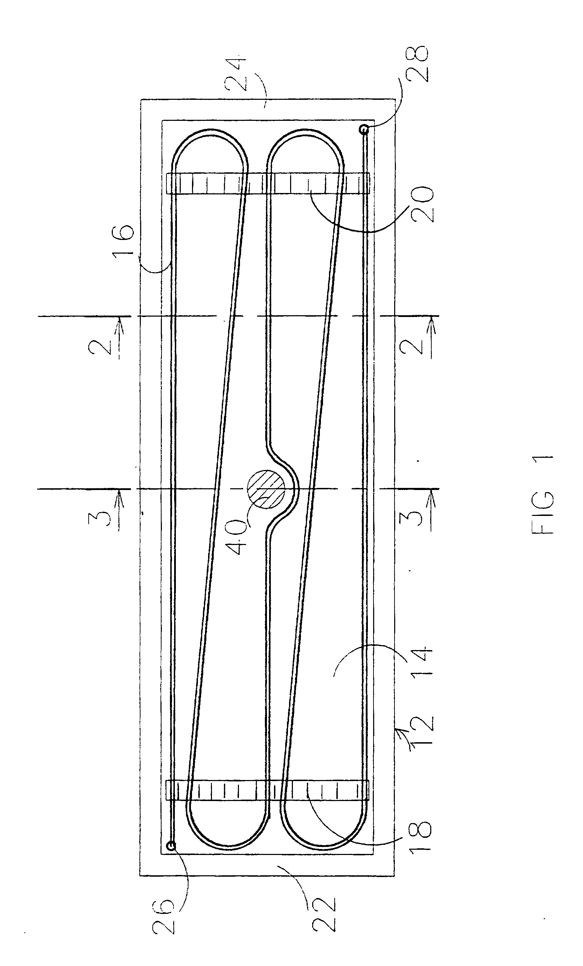

En référence aux figures 1 à 3, un panneau de climatisation 10 modulaire est destiné à être disposé en sous-face du plafond d'un local. Le panneau 10 présente une structure monobloc rectangulaire constituée par une plaque de plâtre 12, dont la face interne 14 orientée vers le plafond est agencée en forme de cuvette.

Un tube 16 de circulation d'un fluide caloporteur est posé sur le fond de la cuvette de la plaque de plâtre 12, en étant positionné dans une paire de rails de maintien 18,20 s'étendant parallèlement au voisinage des petits côtés 22,24 latéraux opposés de la plaque 12. Le tube 16 est réalisé en un matériau synthétique de résistance mécanique élevée, notamment un matériau copolymère de polypropylène, ayant un coefficient de dilatation thermique compatible avec celui du plâtre de la plaque 12.

Le tube 16 est posé à chaud pour former une pluralité de méandres, et les extrémités opposées du tube 16 sont équipées d'une paire de raccords 26,28 de jonction permettant le couplage avec des panneaux adjacents. La pose à chaud du tube 16 évite les risques de tensions mécaniques lors du cintrage des méandres.

La plaque de plâtre 12 est armée à l'intérieur par une armature de fibres de verre lui conférant une certaine rigidité mécanique. Pour optimiser l'échange thermique entre le fluide caloporteur et la plaque de plâtre 12, les différents méandres du tube 16 sont maintenus en bon contact thermique avec la face interne 14 par l'application de moyens de collage.

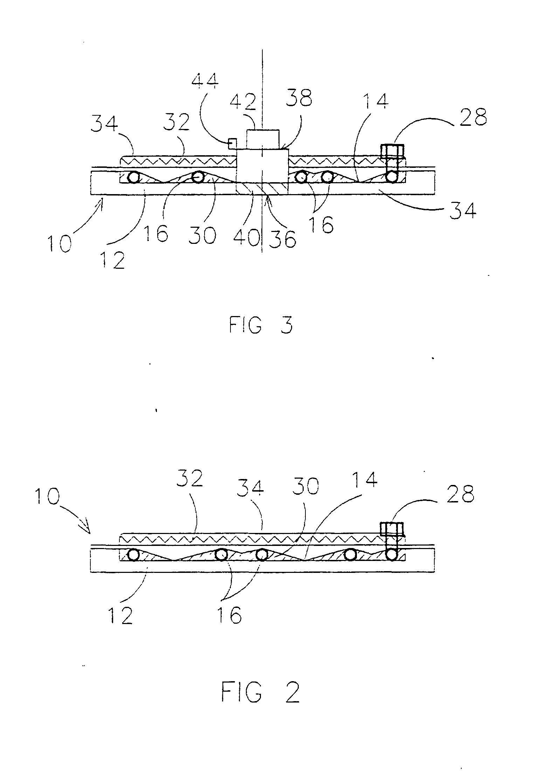

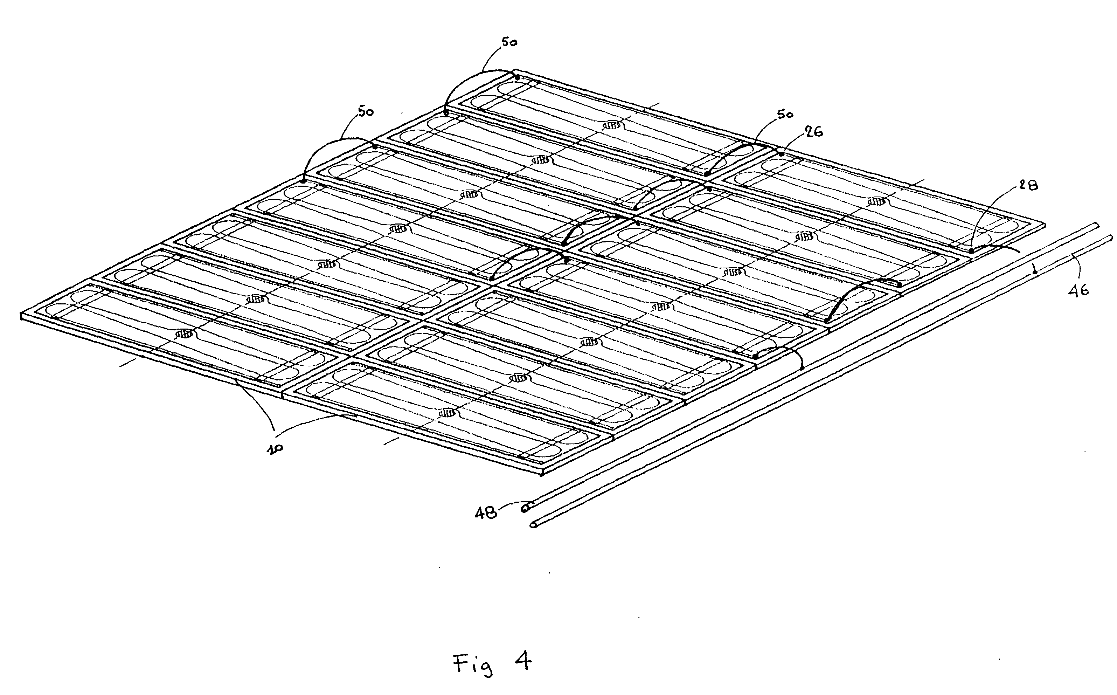

Le choix du matériau constitutif des moyens de collage est essentiel pour conserver une bonne adhérence, indépendamment de la température du fluide caloporteur. Les moyens de collage sont constitués préférentiellement par un enduit 30 spécifique renfermant un composant de même nature que le plâtre de la plaque 12. L'application de l'enduit 30 permet de créer un enrobage continu du tube 16,. ledit enrobage étant conformé selon un cône de réception et/ou de diffusion de la chaleur, le sommet du cône étant situé au dessus du tube 16 (voir figures 2 et 3).

Un revêtement d'isolant thermique 32 est appliqué au-dessus du tube 16 en étant fixé sur les bords de la plaque 12, de manière à obturer toute la surface de la cuvette interne de la plaque de plâtre 12. Le revêtement 32 peut être formé par une couche d'isolant minéral, notamment de laine de verre, associée superficiellement à une feuille d'aluminium 34. L'ensemble constitue un écran thermique agencé entre le tube 16 et le plafond du local pour éviter tout échange vers le haut.

La couche d'isolant minéral du revêtement 32 peut bien entendu être remplacé par un isolant synthétique approprié.

La majorité de l'échange thermique s'effectue entre le tube 16 est la plaque de plâtre 12, la circulation du fluide caloporteur dans le tube 16 entraînant un propagation énergétique par rayonnement vers le bas. En été, dans le cas d'une eau réfrigérée à une température de l'ordre de 15°C à 18°C, on obtient un panneau 10 radiant susceptible d'émettre du froid par le plafond, sans aucun mouvement artificiel de l'air ambiant.

Il est clair que le panneau 10 de climatisation peut être utilisé l'hiver pour le chauffage des locaux. Dans ce cas, le fluide caloporteur est constitué par de l'eau à température régulée pouvant atteindre 55°C.

La propagation par rayonnement du froid ou du chaud intervient dans une zone statique 34 de la plaque de plâtre 12. Une zone dynamique 36 est néanmoins réservée dans la partie centrale de la plaque 12 pour autoriser la mise en place d'un support 38 de réception de moyens de ventilation et/ou d'éclairage. La zone dynamique 36 peut être facilement obtenue en cassant un contour fragilisé 40 prévu dans la plaque de plâtre 12. Il est également possible de fixer à demeure le bol 38 cylindrique sur la plaque de plâtre, et de percer par la suite la zone dynamique de la plaque au moyen d'une scie cloche de diamètre approprié.

Dans l'exemple des figures 1 et 3, la zone dynamique 36 est délimitée par un contour cylindrique, mais il est clair que tout autre section peut être choisie. Le support 38 est conformé selon un bol cylindrique métallique, ayant un raccord 42 destiné à être relié par une gaine de liaison (non représentée) à un dispositif de ventilation forcée, lequel peut être un système d'amenée d'air filtré, ou un système d'extraction d'air vicié. Dans le premier cas, le panneau 10 radiant est associé à une bouche de renouvellement d'air ambiant filtré, et un soufflage d'air s'établit à partir de la zone dynamique 36, pour se propager vers la base de la plaque de plâtre 12.

Dans le deuxième cas, le raccord 42 est connecté à un aspirateur destiné à aspirer l'air vicié, et le rejeter à l'extérieur.

Le support 38 peut également servir de logement à un luminaire électrique, lequel peut être associé au système d'extraction d'air.

Une borne de raccordement 44 est prévue sur le bol pour autoriser la connexion électrique de l'ampoule du luminaire.

Le choix des matériaux du tube 16, de la plaque de plâtre 12, et de l'enduit 30 est primordial pour éviter des dilatations différentielles susceptibles d'affecter le contact thermique entre le tube 16 et la face interne 14 de la plaque 12.

La figure 4 montre l'association de plusieurs panneaux élémentaires de climatisation 10, connectés en série de huit à un collecteur d'entrée 46, et un collecteur de sortie 48 du fluide caloporteur. Les deux collecteurs 46,48 sont agencés d'un même côté en étant reliés à un générateur d'eau froide ou chaude, et la connexion hydraulique entre les différentes panneaux 10 est réalisée au moyen de tuyaux flexibles 50 raccordés aux différents raccords 26,28. Le type de raccord 26,28 peut être quelconque, notamment à vissage ou à fixation rapide par encliquetage avec ou sans clapet intégré.

Le mode de couplage en série-parallèle des différents panneaux 10 peut également être choisi en fonction de la configuration du local à climatiser, et de la puissance frigorifique à mettre en oeuvre.

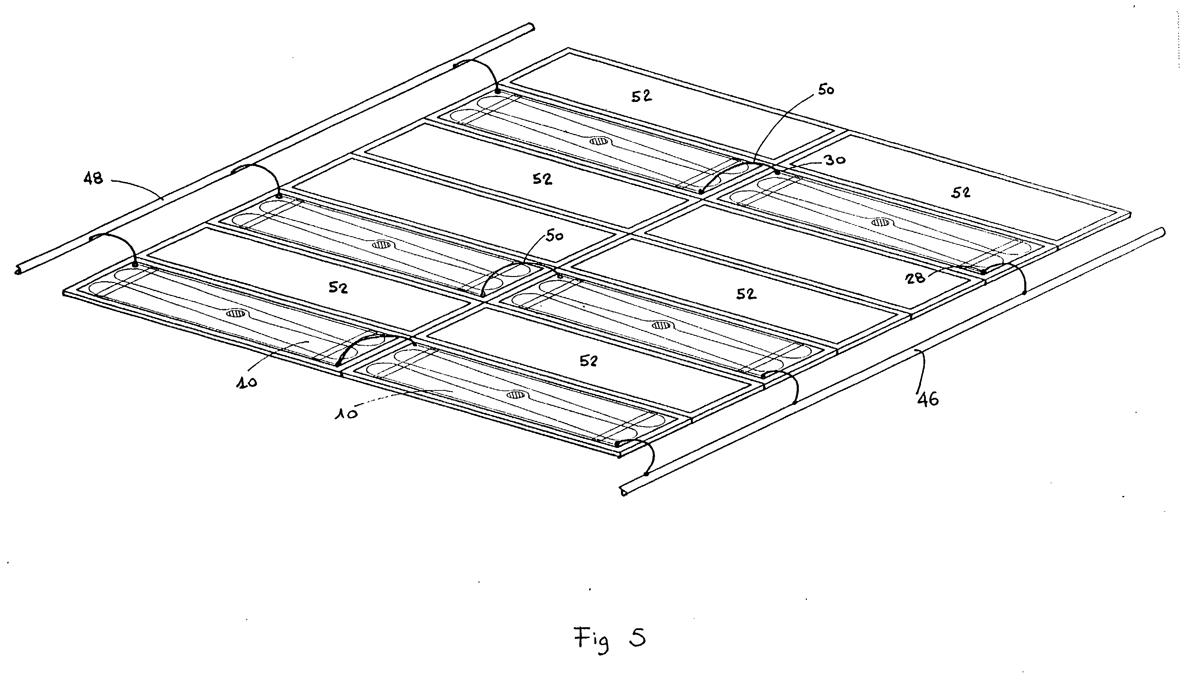

Sur la figure 5, des groupes de deux panneaux 10 reliés en série, sont insérés entre des simples dalles 52 de plâtre non radiantes. Les collecteurs 46,48 sont agencés sur les côtés opposés.

La figure 6 montre l'assemblage des panneaux de climatisation 10 sur une ossature métallique d'un plafond suspendu. L'ossature comporte une pluralité de profilés 54 en T renversé, sur lesquels les différents panneaux 10 restent maintenus par gravité. Les panneaux 10 se trouvent encastrés dans l'ossature, et les profilés 54 font légèrement saillie des zones statiques 34 des plaques 12.

En référence à la figure 7, les panneaux 100 de climatisation comportent des plaques 112 à rainures 56 épousant la forme des branches du profilé 54 en T. Dans ce cas, le profilé 54 est intégré totalement dans les rainures 56 adjacentes des plaques 112, autorisant une disposition semi-apparente des panneaux 100.

Dans les deux dispositions des figures 6 et 7, les panneaux de climatisation 10,100 permettent un démontage facile dalle par dalle. Les zones statiques 34 des panneaux 10,100 peuvent être revêtues par une couche de peinture, ou avoir un aspect granité sans altérer l'effet de rayonnement engendré lors de la circulation du fluide caloporteur dans le tube 16.

Les panneaux 10,100 présentent des formes rectangulaires de dimensions 180cm x 60cm, parfaitement adaptées aux ossatures classiques du commerce. Le diamètre du tube 16 de circulation du fluide caloporteur, peut être choisi dans une fourchette de 10 mm à 20 mm.

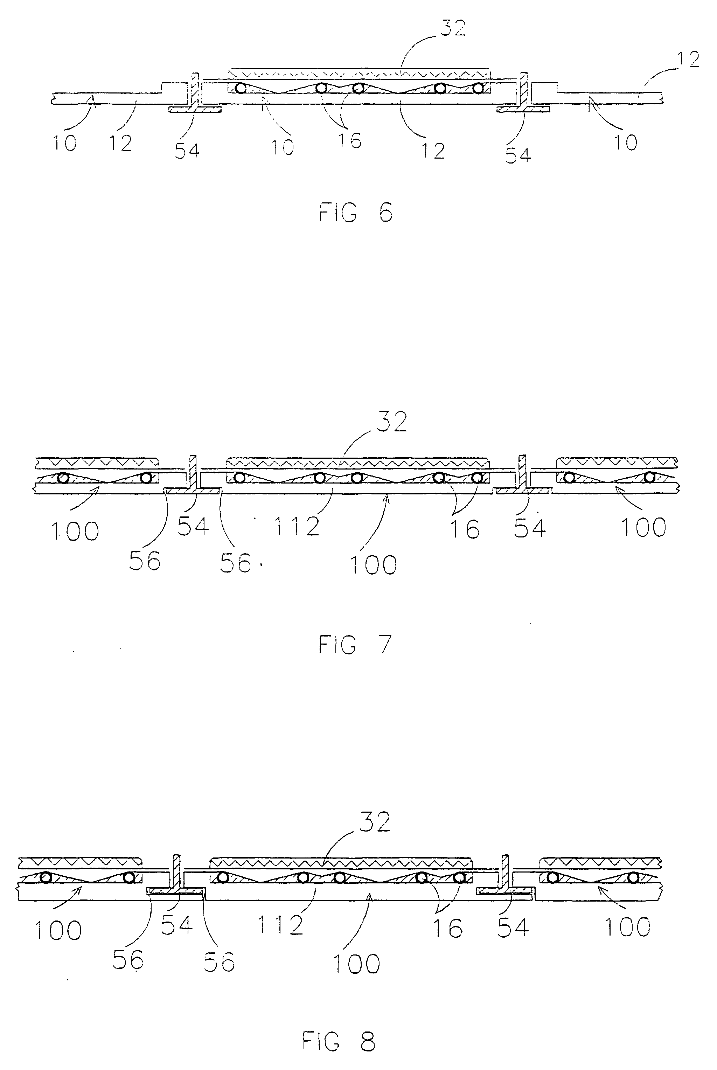

Selon la figure 8, les profilés 54 de l'ossature sont totalement cachés de l'extérieur grâce à une forme appropriée des rainures 56.

Au lieu de réaliser des assemblages à surfaces horizontales démontables représentés dans les figures 6 à 8, les panneaux de climatisation 10,100 peuvent également être utilisés pour un habillage continu en biais selon certaines conditions d'accessibilité des raccords, par exemple dans des combles d'une habitation.

## Revendications

1. Panneau de climatisation (10,100) modulaire destiné à être disposé en sous-face du plafond d'un local à climatiser, et comprenant une plaque de plâtre (12,112) de forme quadrangulaire, se trouvant en contact thermique avec des moyens de circulation d'un fluide caloporteur pour provoquer une propagation énergétique par rayonnement et par convection naturelle, susceptible d'émettre du froid ou du chaud en fonction de la température du fluide caloporteur, les moyens de circulation du fluide comportant un tuyau (16) positionné selon une pluralité de méandres par des rails de maintien (18, 20), et se trouvant en appui contre la face interne (14) de la plaque (12, 112) agencée selon une cuvette,
**caractérisé en ce que**:
- le tube (16) est réalisé en un matériau synthétique de résistance mécanique élevée, et ayant un coefficient de dilatation thermique compatible avec celui du plâtre de la plaque (12,112),
- les méandres du tube (16) sont maintenus en bon contact thermique avec ladite face interne (14) par l'application de moyens de collage à base d'un enduit (30) renfermant un composant de même nature que le plâtre,
- un revêtement d'isolant thermique (32) est appliqué au-dessus du tube (16) en étant fixé sur les bords de la plaque (12,112) pour constituer un écran thermique empêchant un échange calorifique en direction opposée de ladite plaque.

2. Panneau de climatisation selon la revendication 1, **caractérisé en ce que** les extrémités opposées du tube (16) sont équipées d'une paire de raccords de jonction (26,28) pour autoriser le couplage avec des panneaux adjacents.

3. Panneau de climatisation selon la revendication 2, **caractérisé en ce que** chaque raccord de jonction (26,28) est susceptible de coopérer par vissage ou encliquetage avec un tuyau flexible (50) de liaison.

4. Panneau de climatisation selon la revendication 1, **caractérisé en ce que** l'enrobage du tube (16) par l'enduit (30) est continu, et forme un cône de diffusion et/ou d'absorption de la chaleur, le sommet du cône étant situé au-dessus du tube (16), et à l'opposé de la face interne (14).

5. Panneau de climatisation selon la revendication 1, **caractérisé en ce que** le revêtement d'isolant thermique (32) est formé par une couche d'isolant minéral, notamment de laine de verre, et d'une feuille (34) superficielle d'aluminium, laquelle est perforée pour que la plaque de plâtre puisse assurer son rôle de régulateur hygroscopique.

6. Panneau de climatisation selon la revendication 1, **caractérisé en ce que** le revêtement d'isolant thermique (32) est constitué par un matelas d'isolant synthétique.

7. Panneau de climatisation selon la revendication 1, **caractérisé en ce que** la plaque de plâtre (12,112) comporte une première zone statique (34) destinée à la propagation calorifique par rayonnement, et une deuxième zone dynamique (36) réservée pour la mise en place d'un support (38) de réception de moyens de ventilation et/ou d'éclairage, ladite zone dynamique étant accessible en cassant un contour fragilisé de la plaque (12,112), ou en y perçant un trou de diamètre approprié.

8. Panneau de climatisation selon la revendication 7, **caractérisé en ce que** le support (38) comprend un raccord (42) susceptible d'être relié à un dispositif de ventilation forcée.

9. Panneau de climatisation selon la revendication 7 ou 8, **caractérisé en ce que** le support (38) sert de logement à un luminaire électrique.

## Patentansprüche

1. Modulare Klimatisierungsplatte zur Anordnung an der Unterseite der Decke eines zu klimatisierenden Raums, bestehend aus einer viereckigen Gipsplatte (12, 112) in thermischer Berührung mit Umlaufmitteln zum Umlaufen einer Heizflüssigkeit zum Erzeugen einer natürlichen Konvektionsausbreitung und einer Strahlungsausbreitung der Energie, geeignet für das Erzeugen von Wärme oder Kälte abhängig von der Heizflüssigkeitstemperatur, wobei die Umlaufmittel zum Umlaufen der Flüssigkeit einen Schlauch (16) aufweisen, der als eine Vielzahl von mit Halteschienen (18, 20) positionierten Schleifen ausgebildet ist, und gegen die Innenfläche (14) der konkav gewölbten Platte (12, 112) berühren,
**dadurch gekennzeichnet, daß**
- das Rohr (16) aus einem synthetischen Stoff mit einer hohen mechanischen Festigkeit und mit einem mit dem der Gipsplatte (12, 112) kompatiblen Wärmeausdehnungskoeffizient hergestellt ist,
- die Schleifen des Rohres (16) in guter thermischer Berührung mit der genannten Innenfläche (14) durch das Auftragen von Klebemitteln aus einem Putz (30) mit einem darin enthaltenen Bestandteil der gleichen Art wie der Gips gehalten sind,
- eine Verkleidung von thermischem Isolierstoff (32) über das Rohr (16) mit einer Befestigung an den Kanten der Platte (12, 112) aufgetragen wird, um ein Wärmeschutzschild zu bilden, der einen Wärmewechsel in die der genannten Platte abgewandte Richtung verhindert.

2. Klimatisierungsplatte nach Anspruch 1, **dadurch gekennzeichnet, daß** die gegenüberliegenden Ende des Rohres (16) mit einem Paar von Verbindungselementen (26, 28) zum Erlauben der Kupplung mit angrenzenden Platten versehen sind.

3. Klimatisierungsplatte nach Anspruch 2, **dadurch gekennzeichnet, daß** jedes Verbindungselement (26, 28) für das Zusammenwirken mit einem flexiblen Verbindungsschlauch (50) durch eine Verschraubungs- oder Sperrvorrichtung geeignet ist.

4. Klimatisierungsplatte nach Anspruch 1, **dadurch gekennzeichnet, daß** das Umhüllen der Rohres (16) mit dem Putz (30) kontinuierlich ist, und einen Diffusions- und/oder Absorptionskegel für die Wärme bildet, wobei sich die Kegelspitze an einer über dem Rohr (16) und der Innenfläche (14) abgewandten Stellung befindet.

5. Klimatisierungsplatte nach Anspruch 1, **dadurch gekennzeichnet, daß** die Verkleidung von thermischem Isolierstoff (32) von einer Schicht von mineralischem Isolierstoff, besonders von Glaswolle, und von einer Oberflächenfolie (34) aus Aluminium gebildet ist, welche perforiert ist, damit die Gipsplatte als einen hygroskopischen Regler funktionieren kann.

6. Klimatisierungsplatte nach Anspruch 1, **dadurch gekennzeichnet, daß** die Verkleidung von thermischem Isolierstoff (32) aus einer Isoliermatte aus einem synthetischen Stoff besteht.

7. Klimatisierungsplatte nach Anspruch 1, **dadurch gekennzeichnet, daß** die Gipsplatte (12, 112) einen ersten statischen Bereich (34) für die Heizstrahlungsausbreitung, und einen zweiten dynamischen Bereich (36) für das Einlegen eines Halters (38) zur Annahme von Belüftungs- oder Beleuchtungsmitteln aufweist, wobei der dynamische Bereich beim Brechen der Platte (12, 112) entlang einer zerbrechlichen Grenzlinie oder beim Durchbohren eines Loches mit einem entsprechenden Durchmesser zugänglich ist.

8. Klimatisierungsplatte nach Anspruch 7, **dadurch gekennzeichnet, daß** der Halter (38) ein Verbindungselement (42) aufweist, das für die Verbindung mit einer Fremdbelüftungsvorrichtung geeignet ist.

9. Klimatisierungsplatte nach Anspruch 7 oder 8, **dadurch gekennzeichnet, daß** der Halter (38) als eine Aufnahme für eine elektrische Leuchte verwendet ist.

## Claims

1. Modular air-conditioning panel to be disposed on the underside of a ceiling of a room to be air-conditioned, comprising a quadrangular plaster plate (12, 112) in thermal contact with means for circulating a heating fluid to cause a natural-convection propagation and a radiation propagation of energy, able to generate warmth or cold according to the heating fluid temperature, means for circulating a fluid comprising a pipe (16) arranged as a plurality of meanders positioned by holding rails (18, 20), and resting against the internal face (14) of the cupped plate (12, 112),
**characterised in that**:
- the tube (16) is made of a synthetic material with a high mechanical strength, and with a thermal expansion coefficient compatible with that of the plaster which the plate (12, 112) is made of,
- the meanders of the tube (16) are hold in a good thermal contact with said internal face (14) by applying adhesive bonding means based on a coating material containing a composition of the same nature as plaster,
- a thermal insulant coating (32) is applied over the tube (16) while being fixed on the edges of the plate (12, 112) to form a thermal shield for preventing a thermal exchange to the direction opposite to said plate.

2. Air-conditioning panel according to claim 1, **characterised in that** the opposing ends of the tube (16) are provided with a pair of connection adapters (26, 28) to allow the coupling with adjacent panels.

3. Air-conditioning panel according to claim 2, **characterised in that** each connection adapter (26, 28) is able to cooperate with a flexible connection hose (50) through a screwed or snapped joint.

4. Air-conditioning panel according to claim 1, **characterised in that** the coating of the tube (16) with the coating material (30) is continuous, and forms a heat-diffusion and/or absorption cone, the cone apex being situated above the tube (16), and opposite to the internal face (14).

5. Air-conditioning panel according to claim 1, **characterised in that** the thermal insulant coating (32) is formed by a layer of mineral insulant, such as glass wool, and a surface sheet of aluminium, which is perforated for the plaster plate to be able to act as a hygroscopic regulator.

6. Air-conditioning panel according to claim 1, **characterised in that** the thermal insulant coating (32) is made up of a synthetic insulant blanket.

7. Air-conditioning panel according to claim 1, **characterised in that** the plaster plate (12, 112) comprises a first static zone (34) for the heat radiant propagation, and a second dynamic zone (36) for the installation of a reception support for ventilation an/or lighting means, said dynamic zone being accessible by braking the plate (12, 112) along an embrittled boundary line thereof, or by boring therein a hole having an appropriate diameter.

8. Air-conditioning panel according to claim 7, **characterised in that** the support (38) comprises an adapter (42) able to be connected to a forcedventilation device.

9. Air-conditioning panel according to claim 7 or 8, **characterised in that** the support (38) is used to house an electric light.
